# EUROPEAN PATENT SPECIFICATION

(11) **EP 1 836 592 B1**
(45) Date of publication and mention of the grant of the patent: **28.06.2017**
(21) Application number: 05826315.3
(22) Date of filing: 29.11.2005
(51) Int. Cl.: G07B 17/00

(54) **USING ASSOCIATED KNOWLEDGE DATABASES FOR PROVIDING ADDITIONAL INFORMATION IN THE MAILING PROCESS**
VERWENDUNG ASSOZIIERTER WISSENSDATENBANKEN ZUR BEREITSTELLUNG ZUSÄTZLICHER INFORMATIONEN BEIM POSTSENDEPROZESS
UTILISATION DE BASES DE CONNAISSANCES ASSOCIEES POUR FOURNIR DES INFORMATIONS SUPPLEMENTAIRES DANS LE PROCESSUS D'ENVOI POSTAL

(30) Priority: 03.12.2004 US 3837
(43) Date of publication of application: 26.09.2007
(73) Proprietor: Pitney Bowes Inc., Danbury, CT 06810 (US)
(72) Inventor: PINTSOV, Leon, A., West Hartford, CT 06804 (US)
(74) Representative: Hoffmann Eitle
(86) International application number: PCT/US2005/043046
(87) International publication number: WO 2006/060357

(56) References cited:
- EP-A- 1 439 496
- WO-A-2004/029754
- US-A1- 2003 101 147
- US-A1- 2003 149 726
- US-A1- 2004 225 543

## Description

The invention disclosed herein relates generally to mail handling by carriers, and more particularly to accessing information that is related to a mail item but is not part of the mail item.

EP 1 439 496 A2 describes a system for acquiring and storing mailpiece processing and tracking details in association with mailing details for a mailpiece, wherein said mailing details are received from a postal delivery system. The system includes at least one mailpiece processing system for generating mailpieces wherein the mailpiece processing system is configured to generate an electronic file containing the processing details for its generated mailpieces. Also included is at least one imaging device for acquiring images of the generated mailpieces. A database is provided for storing the mailpiece processing and tracking details along with the acquired images. An electronic communication system links the database to: a postal delivery system; the at least one mailpiece processing system and to the mailpiece imaging device. A computer is coupled to the database and is configured to create a searchable electronic catalog whereby the respective mailpiece processing and tracking details and the acquired image for each mailpiece are associated with one another for searching by a user.

US 2003/0101147 A1 describes a method and system for using a tracking ID to facilitate the refunding of unused postage. Information for a postage transaction, along with the tracking ID and an associated delivery status, is stored. This delivery status is updated when the mail piece carrying the tracking ID is delivered. Unused postage can be confirmed by retrieving the stored postage transaction information and determining from that whether there are duplicative postage transactions. The delivery statuses for the duplicative postage transactions can then be reviewed to determine whether the mail pieces associated with these postage transactions have been delivered. If not, one of the postage transactions may be refunded.

WO 2004/029754 A2 describes a method of preparing a mailpiece which includes applying a mailpiece identification (MI) code that uniquely identifies the mailpiece, and applying a destination code to the mailpiece signifying at least part of an address. Tracking and accounting for such a mailpiece includes: at an postal service mail processing (MP) site, obtaining the MI code and the destination code, and sending a mailpiece message including at least the MI code to a postage vendor (PV) site; and at the PV site, storing information from the mailpiece message, debiting an account of the mailer for postage, crediting an account of a postal service for postage, and when the mailpiece message indicates that the mailpiece has arrived at its destination, retiring the MI code as no longer available for use on a mailpiece (at least for some predetermined time).

Traditional mail tracking systems make use of unique identifiers that are created by mailers or mail carriers, such as Posts and private carriers, and imprinted or otherwise evidenced on mail items. The unique mail identifiers are typically used by mailers, recipients or mail carriers to determine the time and location that the mail item was last handled in the mail stream. This is a traditional arrangement for the so-called Track And Trace postal service. In this traditional arrangement, the mail sender is normally provided with the location and time stamp of recorded sighting of the mail item identified by its unique identifier. Although the time/location information is useful, its utility is limited to the cases when mailer needs a proof the mail item has been sent. Since typically the vast majority of mail in industrial world (up to 97%) is delivered within pre-specified delivery standards (2 or 3 days from the day of posting), the precise knowledge of location and time of mail sighting(s) is of limited use. However, many mailers would like to receive (and would pay for) additional and potentially valuable information about mail, its destination and recipient. Such information is usually available and can be made accessible to mailers in a computerized format that is easy to incorporate into the mailers' IT applications. Specifically many advertising (so called "direct" mail) campaigns are executed with very little knowledge of the needs, desires and circumstances of the intended recipients. This not only results in a sizable waste of valuable mail resources but also ends up aggravating recipients since they bombarded by very useless information contained in promotional mailings of this type. For example, when an owner of a condominium or an apartment receives promotional materials for a lawn mower or lawn fertilizers, it creates both wasteful mail for the sender and annoyance factor for the recipient.

This is a known problem associated with direct mail advertising. A typical response for a recipient who is bombarded by useless information is that useful information is easily overlooked and discarded.

Another problem associated with unsolicited mail items, such as direct mail advertising, is experienced at the recipients end. When a recipient receives an unsolicited mail item, the recipient may not be familiar with the mailer or may not know the identity of the mailer.

The object of present invention is to provide a method for overcoming these and other problems by providing mailers and recipients with information that is not typically available for individual mail items.

According to the invention, there is provided a method for providing information about a recipient of a mail item to a sender of the mail item as set out in Claim 1.

The accompanying drawings, which are incorporated in and constitute a part of the specification, illustrate presently preferred embodiments of the invention, and together with the general description given above and the detailed description of the preferred embodiments given below, serve to explain the principles of the invention. As shown throughout the drawings, like reference numerals designate like or corresponding parts. In the drawings:
Fig. 1 is a flow diagram of a mail communication system adapted for use with the present invention;
Fig. 2 is a mail piece created with information encoded in accordance with the present invention;
Fig. 3 is an example of a record that is made accessible to mailer by the carrier, which includes track & trace and demographic/structural information created in accordance with the present invention;
Fig. 4 represent a flow chart of the process for creation of the record of Figure 2;
Fig. 5 is block diagram of the mail communication system of Fig 1 having associated knowledge databases that are accessed in accordance with the present invention;
Fig. 6 is block diagram of the mail communication system of Fig 5 shown from the perspective of the sender of a mail item;
Fig. 7 is a flow chart of the process of using the associated knowledge databases in Fig. 6;
Fig. 8 is block diagram of the mail communication system of Fig 5 shown from the perspective of the recipient of a mail item; and
Fig. 9 is a flow chart of the process of using the associated knowledge databases in Fig. 8.

The following describes a system and method for maintaining a plurality of mail item associated knowledge databases containing information related mail items, senders of mail items, recipients of mail items, dwellings of recipients, mailing addresses and payment by senders for delivery of the mail items wherein information specifically related to a specific mail item can be retrieved from the databases using at least one pointer obtained from information that is or would be printed on the specific mail item.

Also described is a method for, providing information about a recipient of a mail item to a sender of the mail item that is accomplished by processing a mail item with one or more identifiers that identifies at least a recipient of the mail item and a physical address of the recipient; retrieving from at least a first database recipient information relating to the recipient and physical structure attributes relating to the physical address; creating a record of the retrieved recipient information and the retrieved physical structure attributes; and associating the created record with the one or more identifiers whereby the created record can by accessed electronically using the one or more identifiers.

The following further describes a method for providing information about the mail item received by a recipient and about a sender identified on the mail item that is accomplished by receiving a first request from a recipient of a mail item, the first request including at least one unique identifier determined from the mail item, the at least one unique identifier identifying a sender of the mail item and the mail item; retrieving in response to the first request from at least a first database sender information and mail item information using the at least one unique identifier; and providing the recipient access to the retrieved sender information and the retrieved mail item information.

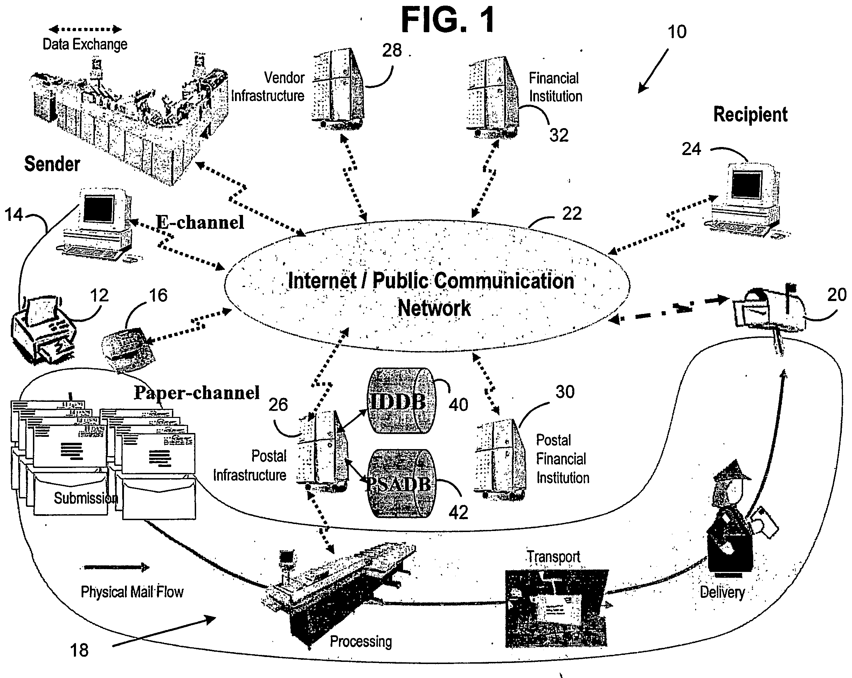

In describing an embodiment of the present invention, reference is made to the drawings, wherein there is seen in Fig. 1 a flow diagram of a mail communication system, generally designated 10, adapted for use with an embodiment of the present invention. A batch of mail items 12 is created by a mailer at a computer system 14 and metered by postage meter 16. The batch is submitted to the carrier, such as a Post, which then processes the mail at one or more processing facilities 18. The processed mail is eventually delivered to the destination 20 of respective mail items 12. Included in the adapted mail communication system 10 is an Internet/Public communication network 22 through which various entities and components of the mailing process communicate with each other. Such entities are the mailer, through the mailer's computer 14 and/or postage meter 16, the recipient, through the recipient's computer 24, the postal infrastructure 26 that processes the mail items 12, the vendor infrastructure 28 that among other things processes the meter accounting, the postal financial institution 30 and the mailer's financial institution 32.

The present method relies on information that typically is available on the physical mail item, more generally known as a "mail entity" (Individual letters, flats or post cards are examples of single mail items, while trays, pallets or roller cages containing individual letters or other (smaller) containers are examples of compound mail entities). For the purpose of the present method, it is envisioned that in all cases, however, mail entities carry a set of data elements presented in a machine- readable format for example in the form of one or two-dimensional bar code. In accordance with the present invention information present on a mail entity is treated as a set of pointers and is used with associated knowledge databases to obtain information about the recipient when requested by the sender of the mail item, or about the sender as when requested by a recipient of the mail item.

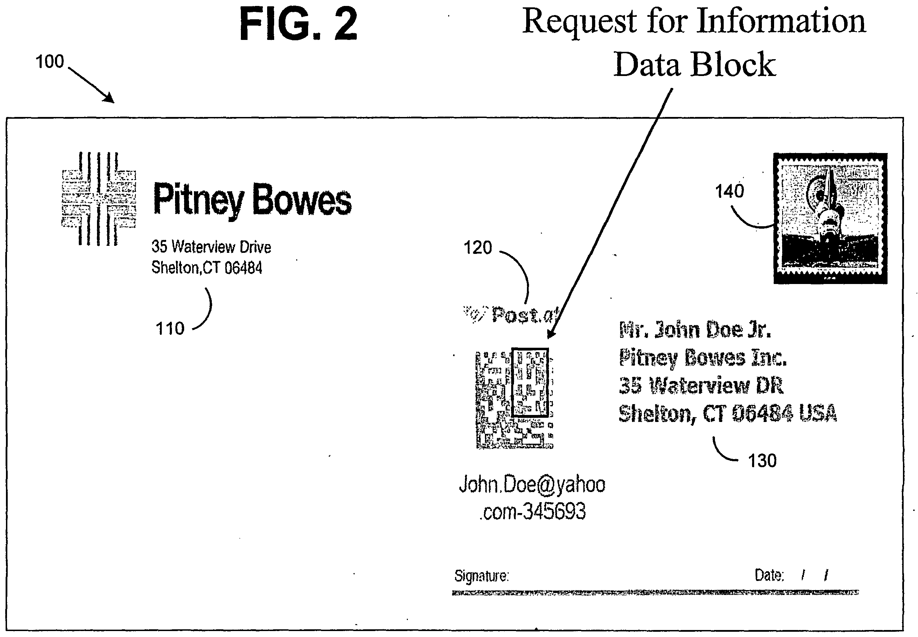

Fig. 2 shows a mail entity (a letter) 100 created with the information encoded according to an embodiment of the present invention. It contains origination address block 110 uniquely indicative of the mailing address of the mail originator (sender). It also contains a machine readable data block 120 that carries sender's instructions to postal operator. The block 120, in general, contains encoded and agreed upon between the sender and the postal operator a set of instructions defining what the sender wants the postal operator to do with the mail entity and information concerning this mail entity (e.g. its digital image), its recipient and the process of mail delivery. It may also contain a set of instructions concerning the processing and disposal of the mail entity in the case when some or all of the sender's wishes could not be fulfilled (contingency instructions). The destination address block 130 is traditional and specifies mailing address of the intended recipient. The postal revenue block 140 represents a proof of postage paid and could be in any suitable form (for example postage stamp, meter impression or Digital Postage Mark, or permit mark). It should be expressly noted that, if block 140 is a Digital Postage Mark containing two-dimensional bar code, the information contained in block 120 could be combined with the postage information in one single block of data. In this case block 120 and block 140 are merged or can be represented as two adjacent blocks of data. It should also be expressly noted that all communications concerning mail entity 100 between parties involved in mail communication system 10 (i.e., sender, recipient and postal operators) require that mail entity 100 carry a unique identifier as a reference pointer. Such an identifier could be any of the appropriately designed identifiers such as license plate, unique serial number, the value of ascending or descending register for metered mail entities or simply a combination of origination and destination address and date (if unique).

One embodiment of the present invention provides information about a recipient to a sender by using information from the destination mailing address 130 on the mail item as one or more pointer(s).

A mailing address normally contains two data components: the intended recipient's name and the destination address. Each provides different information concerning the address.

The intended recipient's name typically identifies an individual (by name), a department (e.g., "marketing department"), or a function (e.g., "accounts receivable"). The recipient(s) identified by the personal name or function is an intended beneficiary of the information or object contained in the mail item. By sending the mail item to the recipient(s), the sender expects them to read, process and act upon information contained in the mail item. Information concerning individuals that reside at a given address is typically collected and stored in a database known as Individual Demographic Data Base or IDDB, which is shown in Fig. 1 as 40. Such demographic databases are known to exist and may contain credit data, purchasing records and other information. IDDB 40 also contains the mailing address for the primary or other residencies of the individuals.

The destination or mailing address is typically uniquely indicative of a location of a physical structure where mail can be received and processed. This structure may be an individual house, an apartment (flat) in a high-rise apartment or an office in an office building, an industrial factory and other structures. The physical structure that is characterized by the destination address has identifiable properties (attributes) that remain fixed for a long time and can be easily captured and computerized by any interested parties. Such attributes include, for example, the size of the structure, its type [industrial, office, residential (house, apartment, condominium), entertainment], its ownership (individual, business, government), the presence or absence certain structural details (lawn, fence), the number and type of transportation units associated with the address and a number of other characteristics that can be defined, coded and stored in a computerized database. The database containing such attributes is referred to herein as the Physical Structure Attributes Data Base or PSADB, which is shown in Fig. 1 as 42. The records in PSADB 42 can be naturally indexed by the mailing address of the corresponding structure.

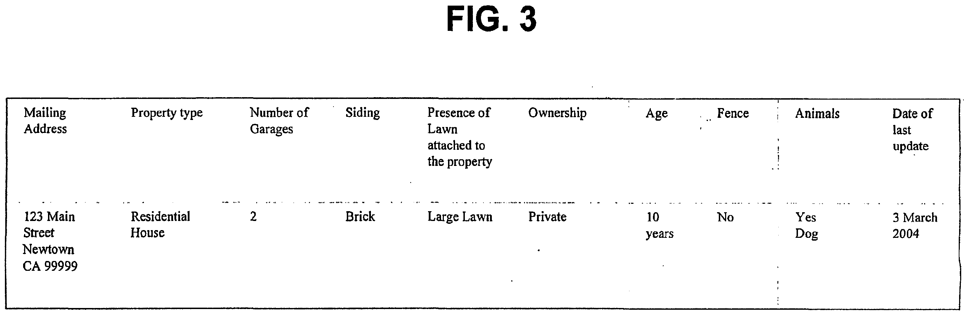

An example of a potential records in PSADB 42 is shown in Fig. 3. The record, which is made accessible to the mailer by the carrier, includes track & trace and demographic/structural information created in accordance with the an embodiment of the present invention.

The number and the type of attributes and the time of their last update can be also recorded in PSADB 42. The age may relate to the age of the structure or to the age of the PO Box (time in continuous operation). This feature may be useful in detection and prevention of mail fraud.

It is noted that PSADB 42 may be created by the postal personnel that delivers mail to the mailing addresses or by specially trained, professional data gatherers using public records and publicly available data or personal data as law permits. Updates to the IDDB and PSADB databases may be made by any number of authorized organizations and processes, and may include information provided by the mail recipients.

A mail entity that requests additional information may form a part of special postal services and may be accounted and paid for by any known methods such as for example postage meters. In the case when a mailer's request for information cannot be satisfied due to, for example, a lack of required data, postage meters can be advantageously used to refund (re-credit) the price for the service back to the meter.

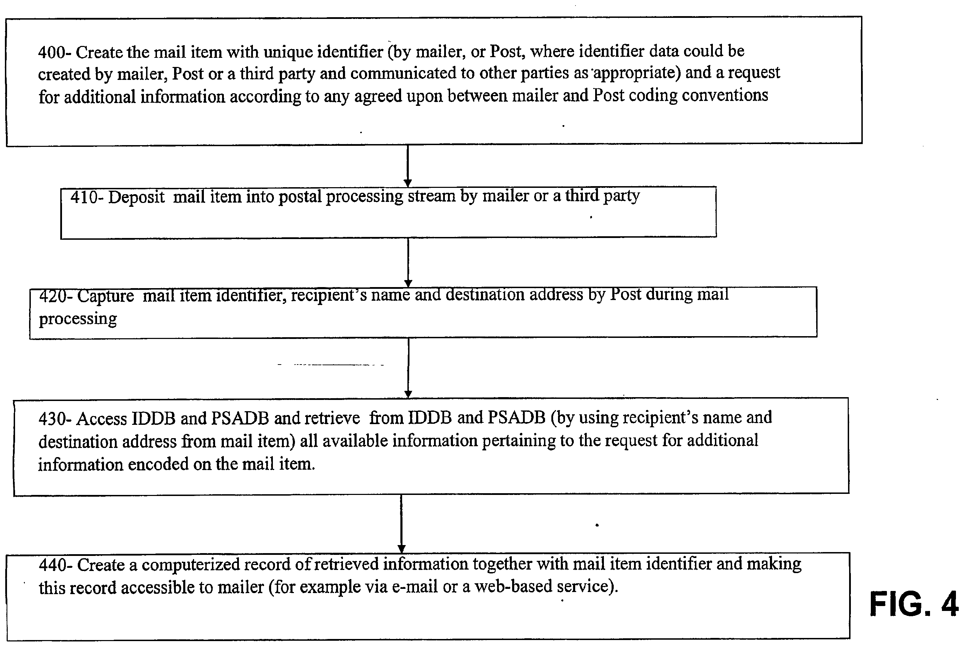

Referring now to Fig. 4, the process for creation of the record of Fig. 2 will now be described. At Step 400, the mail item is created with a unique identifier by the mailer, or the carrier. The identifier data may be created by the mailer, the carrier or may be created by a third party and communicated to other parties as appropriate. The mailer may request additional information associated with the identifier data according to a service agreed upon between the mailer and the carrier. At step 410, the mail item is deposited into mail processing stream by mailer or a third party. During the processing of the mail item, the mail item identifier, recipient's name and destination address is captured by the carrier at step 420. At step 430, the IDDB and the PSADB are accessed and, by using recipient's name and destination address from mail item, all available information from the IDDB and the PSADB that pertains to the request for additional information encoded on the mail item are retrieved. At step 440, a computerized record of the retrieved information associated with mail item identifier is created in a known manner such that this record is accessible to the mailer, for example, via an e-mail or a web-based service.

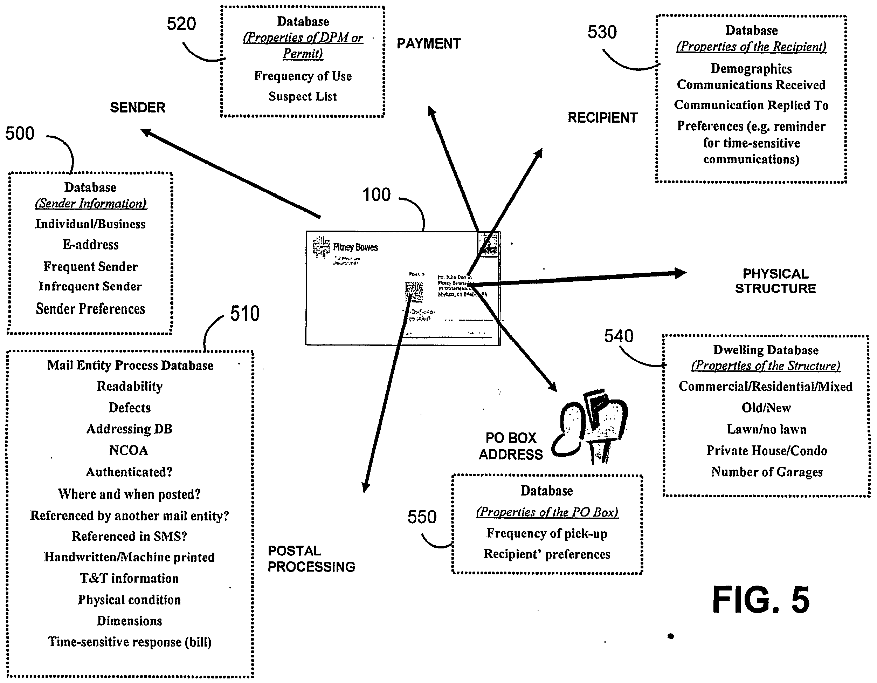

Referring now to Fig. 5, there is shown a block diagram of the mail communication system 10 in Fig 1 having six associated knowledge databases that are maintained and accessed in accordance with the present invention. Three of the databases correspond to sender or postal process related information and three correspond to recipient related information. It will be understood that various combinations of these databases or associated knowledge databases may be used in accordance with the present invention. The three process and sender-related databases are a Sender Information Database 500, a Mail Entity Process Database 510, and a Payment Database 520. The three recipient-related databases are a Recipient Database 530, a Dwelling Database 540, and a Properties of the PO Box Database 550.

The Sender Information Database 500 comprises information relating to the sender of the mail item. Sender Information Database 500 is defined as the database containing known characteristics of sender (such as individual or business entity), its electronic address, frequency of mail use, preferences for mailing services, properties of the sender's facilities, historical business information and the like. Sender Information Database 500 may also contain information relating_ to an e-address (such as an e-mail address or URL) and the volume of mailings by the sender. The Mail Entity Process Database 510 comprises information relating to the mail item. Mail Entity Process Database 510 is defined as a database of information that can be captured during mail item processing by a Postal Operator, a consolidator, carrier or any other party that could be involved in mail processing. For example, Mail Entity Process Database 510 may contain some or all of the following mail item related data: readability of information on the mail item; defects of the data elements or their representation determined during mail entity processing steps, a correct reference address database maintained by the postal operator, National Change Of Address database, the information concerning the question whether the mail item was authenticated (traceable to its originator), where and when the mail item was posted, whether the mail item was referenced by another mail entity or referenced in a submission document known as a Statement of mailing Submission (SMS), whether the mail item was handwritten or machine printed, Track &Trace information, the physical condition and sensory data concerning the mail item (entity) (such as the its dimensions and whether the item has been damaged), and whether the mail item requires a time-sensitive response (such as with a bill). Payment Database 520 is defined as the database containing information about the history of payments for postal charges by mail senders, the history of mail fraud and other potentially suspicious activities. For example, Payment Database 520 may contain some or all of the following postage payment information: type of payment (meter or permit), frequency of use and a mailpiece suspect list.

The Recipient Database 530 comprises information relating to the recipient of the mail item. Recipient Database 530 may contain demographic information about recipient(s) located at given address, communications received and communications replied to by recipients located at a given address, preferences of recipients concerning communications they would like to receive including the timing for such communications and similar information. For example, Recipient Database 530 may contain information relating to recipient preferences, such as reminders for time-sensitive communications. The Dwelling Database 540 comprises information relating to the properties of the building to which the mail item is addressed. Dwelling Database 540 contains (publicly) available information about houses/dwellings located at given addresses such as type of the dwelling, age, size and other observable characteristic of the dwelling. For example, Dwelling Database 540 may contain information relating to the use or condition of the building, such as: commercial, residential or mixed use; age of building; lawn or no lawn; private house, condo or apartment; and garage capacity. The Properties of the PO Box Database 550 comprises information relating to the receipt of the mail. Properties of the PO Box Database 550 may contain observable (for example by carrier employees) information about time and frequency of pick-up for mail items, recipient's preferences and similar information.

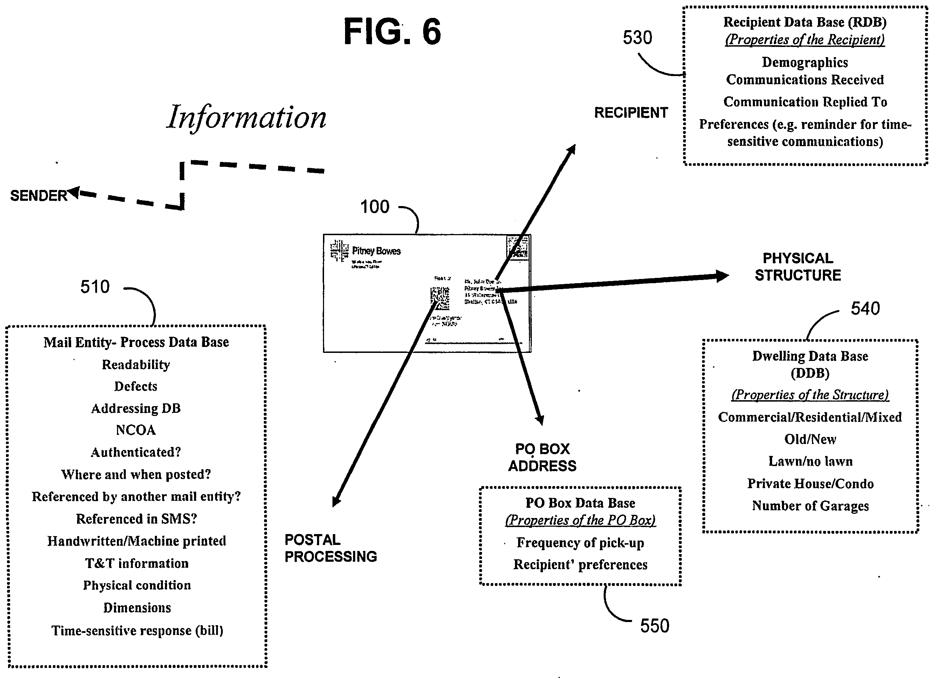

Referring now to Fig. 6, a block diagram of the mail communication system of Fig 5 is shown for an embodiment of the present invention from the perspective of the sender of a mail item. A typical objective for a sender is to identify prospective customers. The sender accomplishes this objective by sending mail containing materials that describe the sender's products and services to potential customers. Heretofore, the sender would use the following traditional process. The sender would obtain a mailing list of recipients from a commercial source. This list, at best, is approximate and is purchased from a source that has some very imprecise knowledge of potential recipients preferences or characteristics. (This is a major defect of the traditional method.) Next, the: sender would create a message (content of a mail item) consisting of a number of printed or computerized materials (CD, DVD, VHS) describing sender's products and services. Then, the sender would create a business reply card or envelope plus a business reply form containing its address, telephone number for the call center or fax number for the call center or a web site address. The sender would then create and post a mailing from the mailing list and content described above. Typically, use of this process results in the sender receiving a low return of responses from recipients (for example, between .05% to 2% of recipients respond).

In accordance with the embodiment of the present invention from the sender's perspective shown in Fig. 6, the carrier, such as a Post, or a third party provider creates and maintains several associated knowledge databases. Specifically, Mail Entity Process Database 510, Recipient Database 530, Dwelling Database 540 and PO Box Database 550 are used in this embodiment.

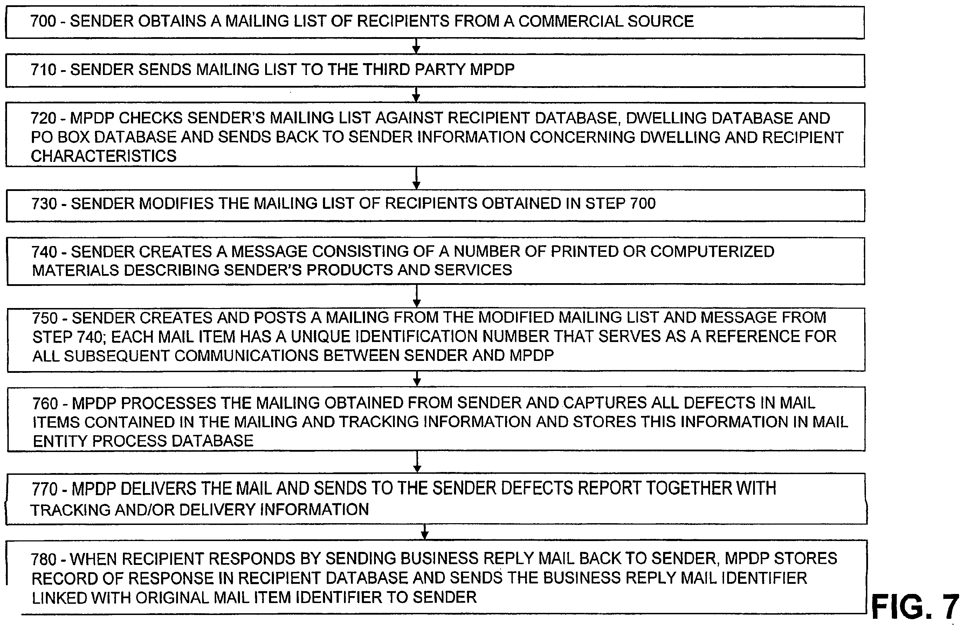

Referring now to Fig. 7, the process from the sender's perspective is shown. At step 700, the sender obtains a mailing list of recipients from a commercial source. At step 710, the sender electronically sends the mailing list to the Post or a third party (referred to as mail processing and delivery party or MPDP) that has access or control of Recipient Database 530, Dwelling Database 540 and PO Box Database 550. The MPDP (e.g. postal operator or a third party/consolidator) collects and stores in (several) databases information about mail senders and recipients. At step 720, the MPDP checks the sender's mailing list against Recipient Database 530, Dwelling Database 540 and PO Box Database 550 and sends back to the sender information concerning dwelling and recipient characteristics. At step 730, the sender modifies the mailing list of recipients obtained in step 700. At step 740, the sender creates a message (content of the mail item) consisting of a number of printed or computerized materials (CD, DVD, VHS) describing sender's products and services. At step 750, the sender creates and posts a mailing from the modified mailing list and message from step 740, whereby each mail item (entity) has a unique identification number that serves as a reference for all subsequent communications between sender and the MPDP. Each mail item in the mailing preferably contains business reply envelope created by the sender with a unique identification directly linked to its mail item identifier. At step 760, the MPDP processes the mailing obtained from the sender and captures all defects in mail items contained in the mailing (for example in address formation, readability and the like) and tracking information and stores this information in Mail Entity Process Database 510. At step 770, the MPDP delivers the mail and (preferably) electronically sends to the sender defects report together with tracking and/or delivery information. At step 780, when a recipient responds by sending business reply mail (BRM) back to the sender, the MPDP stores the record of response in Recipient Database 530 and sends the business reply mail identifier linked with original mail item identifier to the sender.

Steps 710 and 720 are optional to this embodiment. These steps may be skipped when the mailer creates and posts mail items directly from commercially available lists. In this case, the MPDP would send back to mailer all Recipient Database 530, Dwelling Database 540 and PO Box Database 550 information for each mail item indexed by the mail item identifier.

The following are examples of a sender using Dwelling Database 540 in accordance with the present invention to improve the mailing process. First, the sender is a company specializing in home improvements, for example new siding for residential homes or new doors or windows. Such a sender would not want to advertise its products or services to owners of new homes or owners who just made installations of new siding or windows. Dwelling Database 540 contains information that a sender would want to know before sending advertising materials or to avoid repeated sending of such materials to new homeowners. On the other hand, new homeowners buy new furniture, lighting fixtures and the like. An advertiser of such services could obtain valuable information from Dwelling Database 540. Another example is a lawn care company that wants to advertise its fertilizers to homeowners who have lawns. The lawn care company would want to exclude condominium owners and apartment lessees. Dwelling Database 540 contains such valuable information for the lawn care company. Finally, a mail sender would like to know preferences for mail communications expressed by a recipient, which are known to the MPDP.

Another embodiment of the present invention provides information about a sender to a recipient by using information printed on the mailpiece as a pointer that identifies the sender. This allows a mail recipient who intended to respond to a promotional mailing or other advertising materials the chance to request additional information from Post concerning the sender. The request may be whether the sender is actually the entity identified on the mail item. In accordance with the present invention, imprinting on the mail item an identifier corresponding to the sender provides the recipient the capability to submit a request for additional information about the sender before sending in response to the received mail item any monetary instruments such as checks. This would provide better security since so-called "fly-by-night" operators typically do not have established structure or long- term legitimate address or PO Box. In this manner, fraud can be prevented.

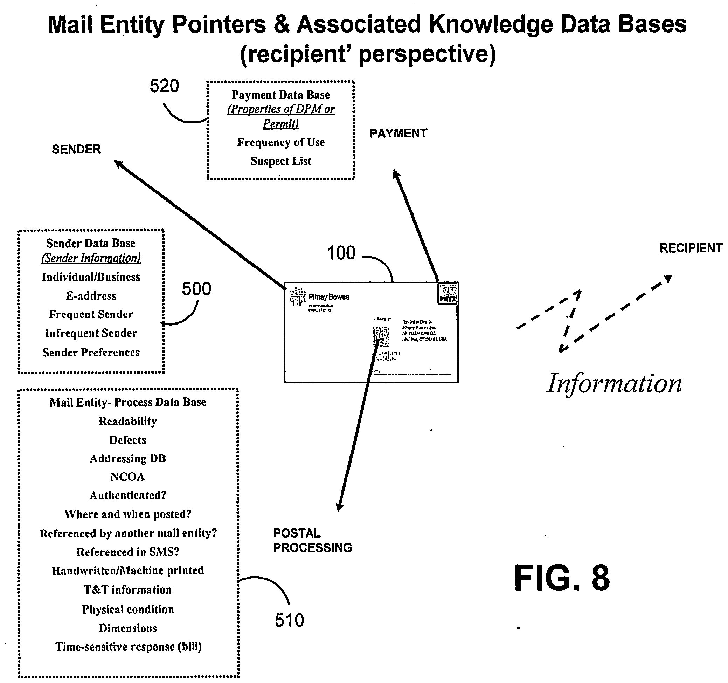

In accordance with another embodiment of the present invention, a block diagram of the mail communication system is shown in Fig. 8 from the recipient's perspective. Again, in this embodiment the carrier, such as a Post, or a third party provider creates and maintains several associated knowledge databases. Specifically, Sender Information Database 500, Mail Entity Process Database 510 and Payment Database 520 are used in this embodiment.

Traditional methods do not provide for the recipient to take advantage of the information available to the MPDP, i.e., information from Sender Information Database 500, Mail Entity Process Database 510 and DPM or Permit Database 520. A mail recipient who receives a mail item that has a problem or is suspicious would like to receive information about mail item sender and the specific mail item above and beyond the information that is available from the mail item itself.

For example, a mail item recipient wants to know (before opening the mail item) whether the sender can be authenticated, i.e., that is the sender is as identified on the mail item and not another party pretending to be such a sender. Access to such information establishes trust and may be important if there is suspicion of contamination, explosive and other dangerous items. Another example is a mail item recipient who wants to know (before opening mail item) whether the sender is trustworthy and what the MPDP knows about the sender. In yet another example, a mail item recipient wants to know whether the mail item is referenced by another mail item. This could relate to a privacy issue, for example, if recipient replies to the mail item received what could become known about the recipient. The present method solves these problems.

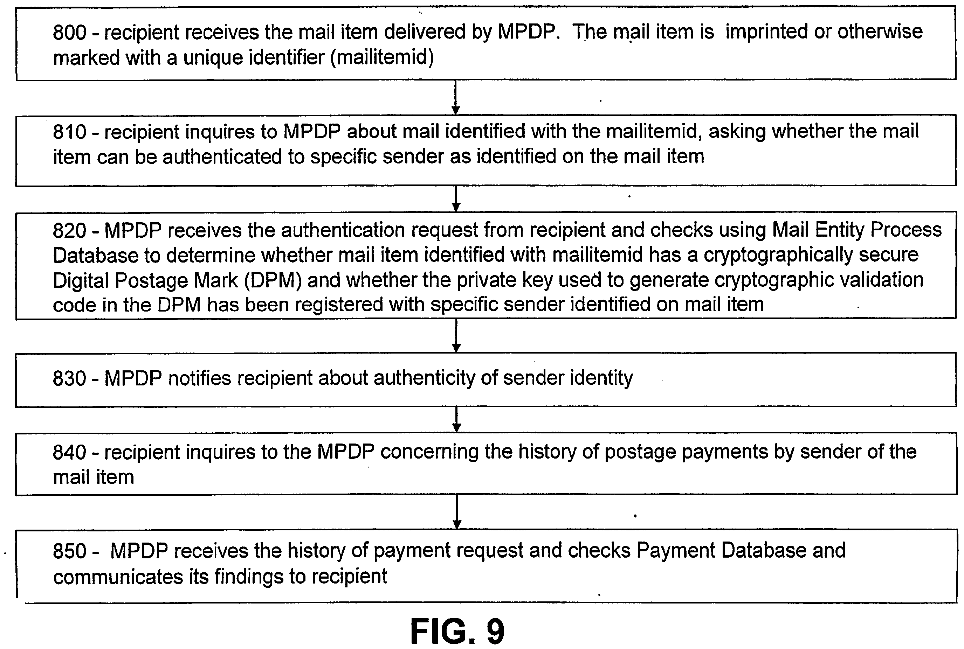

Referring now to Fig. 9, the process from the recipient's perspective is shown. At step 800, the recipient receives the mail item delivered by the MPDP. The mail item is imprinted or otherwise marked with a unique identifier (mailitemID). At step 810, the recipient inquires to the MPDP about mail identified with the mailitemid, specifically asking whether the mail item can be authenticated to the specific sender as identified on the mail item. At step 820, the MPDP receives the authentication request from the recipient and checks using Mail Entity Process Database 510 to determine whether the mail item identified with mailitemID has a cryptographically secure Digital Postage Mark (DPM) and whether the private key used to generate cryptographic validation code in the DPM has been registered with the specific sender identified on the mail item. At step 830, the MPDP notifies the recipient about authenticity of the sender identity. Preferably, this is done electronically when the recipient has been registered with the MPDP and has provided his/her electronic address as a part of registration process. At step 840, the recipient inquires to the MPDP concerning the history of postage payments by the sender of the mail item. Specifically, the recipient wants to know how long the sender has been using mailing services and what is known about the sender's payment accuracy and timeliness. At step 850, the MPDP receives the history of payment request and checks Payment Database 520 and communicates its findings to the recipient in the form of agreed upon message.

## Claims

1. A computer implemented method for providing information about a recipient (24) of a mail item (12, 100) to a sender (14) of the mail item, the method comprising the steps of:
processing (720,730,740) information that would be printed on a mail item (12,100) comprising one or more identifiers (120,130) that identify at least a recipient (24) of the mail item and a physical address of the recipient;
retrieving (730) from at least a first database (530,540) recipient information relating to the recipient and physical structure attributes relating to the physical address;
creating (740) a record of the retrieved recipient information and the retrieved physical structure attributes; and
associating the created record with the one or more identifiers whereby the created record can be accessed electronically using the one or more identifiers;
wherein the step of processing (720,730,740) the information that would be printed on the mail item is performed before the mail item is physically created (750), and wherein the method further comprises:
physically creating the mail item; or
not physically creating the mail item if the sender so decides depending on the retrieved recipient information and the retrieved physical structure attributes.

2. The method of claim 1 comprising the further step of:
creating a single unique identifier of the mail item from the name of the recipient and the mailing address as indicated on the mail item.

3. The method of claim 1 wherein the recipient information is stored in the first database, the recipient information including at least one of the following types of information: recipient demographic information, recipient preferences, communications received by recipient and communications to which the recipient replied.

4. The method of claim 1 wherein the physical structure attributes information is stored in a second database, the physical structure attributes information including the commercial/residential use of a facility at the physical address and other characteristics of the facility.

5. The method of claim 1 wherein the at least a first database is maintained by one of a mail item carrier, a meter vendor or a third party.

6. The method of claim 1 comprising the further step of: retrieving information relating to the mail item and relating to the receipt of the mail by the recipient.

7. The method of claim 1 wherein the information relating to the mail item and to the receipt of the mail by the recipient are stored respectively in third and fourth databases.

## Patentansprüche

1. Computerimplementiertes Verfahren zum Bereitstellen von einer Information über einen Empfänger (24) eines Poststücks (12, 100) an einen Absender (14) des Poststücks, wobei das Verfahren die folgenden Schritte umfasst:
Verarbeiten (720, 730, 740) von einer Information, die auf ein Poststück (12, 100) gedruckt werden würde, eine oder mehrere Identifizierungen (120, 130) umfassend, die wenigstens einen Empfänger (24) des Poststücks und eine körperliche Adresse des Empfängers identifizieren;
Abrufen (730) von einer den Empfänger betreffenden Empfängerinformation und von die körperliche Adresse betreffenden körperlichen Strukturattributen aus wenigstens einer ersten Datenbank (530, 540);
Erzeugen (740) eines Datensatzes der abgerufenen Empfängerinformation und der abgerufenen körperlichen Strukturattributen; und
Verknüpfen des erzeugten Datensatzes mit dem einen oder den mehreren Identifizierungen, wobei auf den erzeugten Datensatz elektronisch unter Verwendung des einen oder der mehreren Identifizierungen zugegriffen werden kann;
wobei der Schritt des Verarbeitens (720, 730, 740) der Information, die auf das Poststück gedruckt werden würde, durchgeführt wird, bevor das Poststück physikalisch erzeugt (750) wird, und wobei das Verfahren weiter umfasst:
physikalisches Erzeugen des Poststücks; oder
nicht physikalisches Erzeugen des Poststücks, wenn der Absender dies abhängig von der abgerufenen Empfängerinformation und den körperlichen Strukturattributen so entscheidet.

2. Verfahren nach Anspruch 1, das den folgenden weiteren Schritt umfasst:
Erzeugen einer einzigen einmaligen Identifizierung des Poststücks aus dem Namen des Empfängers und der Postanschrift, wie auf dem Poststück angegeben.

3. Verfahren nach Anspruch 1, wobei die Empfängerinformation in der ersten Datenbank gespeichert wird, wobei die Empfängerinformation wenigstens einen der folgenden Informationstypen enthält: demographische Empfängerinformation, Empfängerpräferenzen, von dem Empfänger empfangene Nachrichten und Nachrichten, auf welche der Empfänger antwortete.

4. Verfahren nach Anspruch 1, wobei die Information über die körperlichen Strukturattribute in einer zweiten Datenbank gespeichert wird, wobei die Information über die körperlichen Strukturattribute die Gewerbe-/Wohnnutzung einer Einrichtung an der körperlichen Adresse und andere Eigenschaften der Einrichtung enthält.

5. Verfahren nach Anspruch 1, wobei die wenigstens eine erste Datenbank durch einen von einem Poststückzusteller, einem Frankiermaschinenanbieter oder einer dritten Partei unterhalten wird.

6. Verfahren nach Anspruch 1, das den folgenden weiteren Schritt umfasst: Abrufen von Informationen betreffend das Poststück und betreffend den Empfang der Post durch den Empfänger.

7. Verfahren nach Anspruch 1, wobei die Informationen betreffend das Poststück und den Empfang der Post durch den Empfänger in einer dritten beziehungsweise vierten Datenbank gespeichert werden.

## Revendications

1. Procédé mis en oeuvre par ordinateur pour fournir des informations ayant trait à un destinataire (24) d'un article de courrier (12, 100) à un expéditeur (14) de l'article de courrier, le procédé comprenant les étapes consistant à :
traiter (720, 730, 740) des informations qui seraient imprimées sur un article de courrier (12, 100) comprenant un ou plusieurs identifiants (120, 130) qui identifient au moins un destinataire (24) de l'article de courrier et une adresse physique du destinataire ;
extraire (730) d'au moins une première base de données (530, 540) des informations de destinataire ayant trait au destinataire et des attributs de structure physique ayant trait à l'adresse physique ;
créer (740) un enregistrement des informations de destinataire extraites et des attributs de structure physique extraits ; et
associer l'enregistrement créé avec les un ou plusieurs identifiants de manière qu'il soit possible d'accéder électroniquement à l'enregistrement créé en utilisant les un ou plusieurs identifiants ;
l'étape de traitement (720, 730, 740) des informations qui seraient imprimées sur l'article de courrier étant réalisée avant que l'article de courrier soit créé physiquement (750), et le procédé comprenant, en outre, les étapes consistant à :
créer physiquement l'article de courrier ; ou
ne pas créer physiquement l'article de courrier si l'expéditeur en décide ainsi en fonction des informations de destinataire extraites et des attributs de structure physique extraits.

2. Procédé selon la revendication 1, comprenant l'étape supplémentaire consistant à :
créer un seul identifiant unique de l'article de courrier à partir du nom du destinataire et de l'adresse postale comme indiqué sur l'article de courrier.

3. Procédé selon la revendication 1, dans lequel les informations de destinataire sont stockées dans la première base de données, les informations de destinataire comprenant au moins l'un des types suivants d'informations : informations démographiques sur le destinataire, préférences du destinataire, communications reçues par le destinataire et communications auxquelles le destinataire a répondu.

4. Procédé selon la revendication 1, dans lequel les informations d'attributs de structure physique sont stockées dans une deuxième base de données, les informations d'attributs de structure physique incluant l'utilisation commerciale/résidentielle d'un établissement à l'adresse physique et d'autres caractéristiques de l'établissement.

5. Procédé selon la revendication 1, dans lequel l'au moins une première base de données est gérée par l'un des acteurs suivants : transporteur d'articles de courrier, fournisseur de système à affranchir ou tiers.

6. Procédé selon la revendication 1, comprenant l'étape supplémentaire consistant à : extraire des informations ayant trait à l'article de courrier et ayant trait à la réception du courrier par le destinataire.

7. Procédé selon la revendication 1, dans lequel les informations ayant trait à l'article de courrier et à la réception du courrier par le destinataire sont stockées respectivement dans des troisième et quatrième bases de données.
